(19) Europäisches Patentamt
European Patent Office
Office européen des brevets

(11) **EP 1 902 839 B1**

(12) **EUROPÄISCHE PATENTSCHRIFT**

(45) Veröffentlichungstag und Bekanntmachung des Hinweises auf die Patenterteilung:
**23.11.2011   Patentblatt 2011/47**

(51) Int Cl.:
*B32B 27/36* (2006.01)     *B32B 27/20* (2006.01)
*B32B 37/14* (2006.01)     *B32B 37/15* (2006.01)
*B65D 77/20* (2006.01)     *B32B 27/38* (2006.01)

(21) Anmeldenummer: **07017279.6**

(22) Anmeldetag: **04.09.2007**

(54) **Weisse, einseitig matte, siegelfähige, biaxial orientierte Polyesterfolie**

White, one-sided matt, sealable, biaxially oriented polyester film

Feuille de polyester blanche, mate sur une face, scellable, biaxialement étirée

(84) Benannte Vertragsstaaten:
**DE FR GB IT LU TR**

(30) Priorität: **13.09.2006   DE 102006042887**

(43) Veröffentlichungstag der Anmeldung:
**26.03.2008   Patentblatt 2008/13**

(73) Patentinhaber: **Mitsubishi Polyester Film GmbH**
**65203 Wiesbaden (DE)**

(72) Erfinder:
• **Jesberger, Martin, Dr.**
**55122 Mainz (DE)**
• **Konrad, Matthias, Dr.**
**65719 Hofheim (DE)**
• **Michalski, Artur**
**55435 Gau-Algesheim (DE)**
• **Hilkert, Gottfried, Dr.**
**55291 Saulheim (DE)**

(74) Vertreter: **Schweitzer, Klaus et al**
**Plate Schweitzer Zounek**
**Patentanwälte**
**Rheingaustrasse 196**
**65203 Wiesbaden (DE)**

(56) Entgegenhaltungen:
EP-A- 1 529 636     EP-A- 1 529 797
EP-A- 1 529 799     EP-A- 1 806 225
EP-A- 1 806 226     WO-A-01/53092

**Beschreibung**

Die Erfindung betrifft eine weiße, einseitig matte, siegelfähige, biaxial orientierte Polyesterfolie umfassend eine Basisschicht B, eine siegelfähige Deckschicht A und eine nicht siegelfähige weiße matte Deckschicht C. Die erfindungsgemäße Folie kann darüber hinaus mindestens eine funktionalisierte Oberfläche aufweisen, wodurch z. B. eine gute Haftung gegenüber anderen Polymer- oder Metall-Schichten oder Druckfarben erzielt wird. Dazu wird diese Oberfläche mit einer haftvermittelnden Schicht in-line beschichtet. Die Erfindung betrifft weiterhin ein Verfahren zur Herstellung der Folie und ihre Verwendung.

Siegelfähige, biaxial orientierte Polyesterfolien nach dem Stand der Technik sind bekannt.

In der GB-A-1 465 973 wird eine coextrudierte, zweischichtige Polyesterfolie beschrieben, deren eine Schicht aus isophthalsäure- und terephthalsäurehaltigen Copolyestern und deren andere Schicht aus Polyethylenterephthalat besteht. Über das Siegelverhalten der Folie finden sich in der Schrift keine verwertbaren Angaben. Wegen fehlender Pigmentierung ist die Folie nur bedingt wickelbar und weiterverarbeitbar.

In der EP-A-0 035 835 wird eine coextrudierte siegelfähige Polyesterfolie beschrieben, der zur Verbesserung des Wickel- und des Verarbeitungsverhaltens in der Siegelschicht Partikel zugesetzt werden, deren mittlere Teilchengröße die Schichtdicke der Siegelschicht übersteigt. Durch die teilchenförmigen Zusatzstoffe werden Oberflächenvorsprünge gebildet, die das unerwünschte Blocken und Kleben der Folie an Walzen oder Führungen verhindern. Über die andere, nicht siegelfähige Schicht der Folie werden keine näheren Angaben zur Einarbeitung von Antiblockmitteln gemacht. Es bleibt offen, ob diese Schicht Antiblockmittel enthält. Durch Wahl von Partikeln mit größerem Durchmesser als die Dicke der Siegelschicht und den in den Beispielen angegebenen Konzentrationen wird das Siegelverhalten der Folie verschlechtert. Die Siegelnaht wird bei 140 °C hergestellt und die Siegelnahtfestigkeit bei 23 °C bestimmt, und sie liegt in einem Bereich von 63 bis 120 N/m (entsprechend 0,97 bis 1,8 N/15 mm Folienbreite).

In der EP-A-0 515 096 wird eine coextrudierte, mehrschichtige, siegelfähige Polyesterfolie beschrieben, die auf der siegelfähigen Schicht ein zusätzliches Additiv aufweist. Das Additiv kann z. B. anorganische Partikel enthalten und wird vorzugsweise als wässrige Schicht auf die Folie bei deren Herstellung aufgetragen. Hierdurch sollen die guten Siegeleigenschaften beibehalten werden und die Folie gut zu verarbeiten sein. Die Rückseite der Folie enthält nur sehr wenige Partikel, die hauptsächlich über das Regranulat in diese Schicht gelangen. Angaben zum Siegeltemperaturbereich der Folie werden in dieser Schrift nicht gemacht. Die Siegelnaht wird bei 140 °C hergestellt und die Siegelnahtfestigkeit bei 23 °C bestimmt, und sie beträgt mehr als 200 N/m (entsprechend 3 N/15 mm Folienbreite). Für eine 3 $\mu$m dicke Siegelschicht wird eine Siegelnahtfestigkeit von 275 N/m (entsprechend 4,125 N/15 mm Folienbreite) angegeben.

In der EP-A-1 138 480 wird eine biaxial orientierte, siegelfähige Polyesterfolie mit einer Basisschicht B, einer siegelfähigen Deckschicht A und einer weiteren, nicht siegelfähigen Deckschicht C beschrieben. Die siegelfähige Deckschicht A hat eine Siegelanspringtemperatur (auch Mindestsiegeltemperatur genannt) von maximal 110 °C und eine Siegelnahtfestigkeit von mindestens 1,3 N/15 mm Folienbreite. Die Topographien der beiden Deckschichten A und C sind durch bestimmte Merkmale gekennzeichnet. Die erfindungsgemäße Folie eignet sich besonders für den Einsatz in der flexiblen Verpackung, und zwar insbesondere für den Einsatz auf schnelllaufenden Verpackungsmaschinen. In Vergleichsbeispiel 1 der Anmeldung wird eine Folie beschrieben, bei der die Siegelschicht pigmentfrei ist. Die Folie hat jedoch ein nicht akzeptables Handling und ein nicht akzeptables Verarbeitungsverhalten.

Ebenfalls bekannt sind nach dem Stand der Technik matte, milchig scheinende, biaxial orientierte Polyesterfolien.

In der DE-A-23 53 347 wird ein Verfahren zur Herstellung einer ein- oder mehrschichtigen, milchigen Polyesterfolie beschrieben, das dadurch gekennzeichnet ist, dass man ein Gemisch aus Teilchen eines linearen Polyesters mit 3 bis 27 Gew.-% eines Homopolymeren oder Mischpolymeren von Ethylen oder Propylen herstellt, das Gemisch als Film extrudiert, den Film abschreckt und durch Verstrecken in senkrecht zueinander verlaufenden Richtungen biaxial orientiert und den Film thermofixiert. Nachteilig an dem Verfahren ist, dass das bei der Herstellung der Folie anfallende Regenerat (im Wesentlichen ein Gemisch aus Polyesterrohstoff und Ethylen- oder Propylen-Mischpolymer) nicht mehr erneut bei der Folienherstellung eingesetzt werden kann, da ansonsten die Folie gelb wird. Das Verfahren ist damit aber unwirtschaftlich, und die mit Regenerat produzierte, gelbliche Folie konnte sich am Markt nicht durchsetzen. Bei Erhöhung der Konzentration des Mischpolymeren im Polyester verliert die Folie im Allgemeinen ihren milchigen Charakter und wird weiß. Der Weißgrad reicht für viele Anwendungen nicht aus. Die Gelbfärbung der Folie wirkt sich negativ auf das Druckbild aus und ist daher unerwünscht.

In der US-A-3,154,461 wird eine biaxial orientierte Folie aus thermoplastischem Kunststoff (z. B. Polyethylenterephthalat, Polypropylen) mit matter Oberfläche beansprucht, die inkompressible Partikel (z. B. Calciumcarbonat, Siliciumdioxid) in einer Größe von 0,3 bis 20 $\mu$m und in einer Konzentration von 1 bis 25 % enthält. Für viele transparente Anwendungen ist diese Folie aber zu trüb und für viele weiße Anwendungen zu transparent und der Weißgrad zu gering.

Die WO 01/53092 beschreibt eine Polyesterfolie, die mindestens eine weiße Basisschicht (B), mindestens eine Siegelschicht (A) sowie eine nicht siegelfähige Deckschicht (C) aufweist. Weiter war bekannt, dass die Basisschicht (B) der bekannten Folie Weißpigment in einer Menge von mehr als 12 Gew.-% enthält. Die Pigmentkonzentration in der Deckschicht (C) liegt dagegen niedriger, eine Anregung, die maximale Konzentration der Pigmente und Antiblockmittel in dieser Schicht (C) zu erhöhen, gibt es in der Schrift nicht.

Die EP-A-1 529 797 beschreibt eine peelfähige Polyesterfolie mit selbsttätiger Entlüftung, die einen dreischichtigen Aufbau besitzt. Eine Basisschicht (B) enthält Weißpigment in einer Menge von 4 bis 16 Gew.-%, eine Deckschicht (A) enthält Polyester plus anorganische oder organische Partikel in einer Menge von bis zu 10 Gew.-%, wobei der Deckschicht (A) gegenüber eine Deckschicht (C) angeordnet ist, die den Glanz der Folie erhöhen soll. Dazu enthält die Deckschicht (C) übliche Partikel, die auch als Antiblockmittel beschrieben sind, in geringen Mengen. Eine Lehre, die Konzentration der Antiblockmittel in der Deckschicht (C) zu erhöhen, kann der Fachmann dieser Schrift nicht entnehmen.

Aufgabe der vorliegenden Erfindung war es nun, eine weiße, einseitig matte, siegelfähige, biaxial orientierte Polyesterfolie bereitzustellen, die die Nachteile der Folien nach dem Stand der Technik nicht aufweist und sich insbesondere durch

- eine verbesserte Siegelfähigkeit gegenüber sich selbst,
- eine verbesserte Wickelung,
- verbessertes Verarbeitungsverhalten,
- verbesserte optische Eigenschaften (niedriger Glanz, hoher Weißgrad, niedrige Transparenz) und
- ggf. eine zusätzliche Funktionalität

auszeichnet.

Ein besonderes Anliegen der vorliegenden Erfindung war es, eine siegelfähige weiße Folie mit weißer, matter Deckschicht bereitzustellen mit hervorragenden optischen Eigenschaften (Glanz, Weißgrad, Transparenz). Ein weiteres Anliegen der Erfindung war es, die Siegelung der Folie gegenüber sich selbst, gegen andere (nicht siegelfähige) Polyesterfolien oder gegen metallische Substrate zu verbessern. Dies bedeutet eine Mindestsiegeltemperatur der Deckschicht A gegenüber sich selbst von <110 °C, bevorzugt <108 °C und besonders bevorzugt <106 °C, und eine Siegelnahtfestigkeit dieser Deckschicht A gegenüber sich selbst (bei 130 °C) von 1,5 bis 10 N/15 mm, bevorzugt von 1,6 bis 10 N/15 mm und besonders bevorzugt von 1,7 bis 10 N/15 mm. Bei der Herstellung der Folie sollte zudem gewährleistet sein, dass anfallendes Verschnittmaterial als Regenerat in einer Menge von bevorzugt bis zu 60 Gew.-%, bezogen auf das Gesamtgewicht der Folie, wieder dem Herstellprozess zurückgeführt werden kann, ohne dass dabei die physikalischen und optischen Eigenschaften der Folie negativ beeinflusst werden.

Eine Deckschicht ist dann nicht siegelfähig, wenn ihre Siegelanspringtemperatur, auch Mindestsiegeltemperatur genannt, größer als 125 °C (gegen sich selbst) ist.

Die Aufgabe wird erfindungsgemäß durch die Bereitstellung einer weißen, einseitig matten, biaxial orientierten, siegelfähigen Polyesterfolie mit einer Basisschicht (B) aus thermoplastischem Polyester, einer siegelfähigen Deckschicht (A) und einer matten, nicht siegelfähigen Deckschicht (C) gelöst, deren nähere Ausgestaltung in Patentanspruch 1 angegeben ist.

Gegebenenfalls ist die Deckschicht C funktionalisiert, was bedeutet, dass die Oberfläche C der Folie einer funktionsvermittelnden Behandlung (z. B. Corona, Flamme) unterworfen wurde oder funktionsvermittelnd beschichtet wurde.

Die matte Deckschicht (C) enthält ein Weißpigment in einer Konzentration von 1 bis 15 Gew.-%, bevorzugt von 2 bis 14 Gew.-% und besonders bevorzugt von 3 bis 13 Gew.-%. Darüber hinaus enthält die Deckschicht (C) Partikel in einer Konzentration von 1 bis 7 Gew.-%, wobei diese Partikel von Weißpigmenten verschiedene Partikel sind.

Es hat sich zur Erzeugung des niedrigen Glanzes (der Mattheit) als besonders vorteilhaft erwiesen, in der Deckschicht (C) zusätzlich, d. h. neben dem Weißpigment und von diesem verschieden, Teilchen mit einem mittleren Partikeldurchmesser $d_{so}$ von 2,0 bis 10 $\mu$m, bevorzugt 2,2 bis 9 $\mu$m und besonders bevorzugt von 2,4 bis 8 $\mu$m, zu verwenden. Bei der Verwendung von Teilchen mit einem Durchmesser, der unterhalb 2,0 $\mu$m liegt, stellt sich ein zu hoher Glanz ein. Teilchen mit einem Durchmesser größer als 10 $\mu$m verursachen in der Regel Filterprobleme. Bevorzugt beträgt die Konzentration der Partikel 1,5 bis 6,5 Gew.-% und besonders bevorzugt 2,0 bis 6,0 Gew.-%. Enthält die Deckschicht (C) der Folie dagegen Partikel in einer Konzentration von weniger als 1,0 Gew.-%, so ist sie für eine Anwendung als Mattfolie weniger geeignet. Enthält dagegen die Deckschicht (C) der Folie Partikel in einer Konzentration von mehr als 7,0 Gew.-%, so wird die homogene Einarbeitung der Partikel erschwert, was zu unerwünschten Streifen führen kann.

In einer bevorzugten Ausführungsform der Erfindung enthält die weiße matte Deckschicht (C) einen Copolyester, der aus Terephthalat- und Isophthalat-Einheiten und aus Ethylenglykol-Einheiten aufgebaut ist. Der Anteil an Terephthalat-Einheiten in diesem Copolyester, bezogen auf die Gesamtsäuremenge, beträgt bevorzugt 70 bis 96 Mol-% und der entsprechende Anteil an Isophthalat-Einheiten 30 bis 4 Mol-%. Besonders bevorzugt sind hierunter solche Copolyester, bei denen der Anteil an Terephthalat-Einheiten 72 bis 94 Mol-% und der entsprechende Anteil an Isophthalat-Einheiten 6 bis 28 Mol-% beträgt. Ganz bevorzugt sind solche Copolyester, bei denen der Anteil an Terephthalat-Einheiten 74 bis 92 Mol-% und der entsprechende Anteil an Isophthalat-Einheiten 8 bis 26 Mol-% beträgt.

Überraschenderweise hat sich gezeigt, dass man bei Verwendung der zuvor beschriebenen Rohstoffe, insbesondere bei der Verwendung von der Isophthalsäure in der angegebenen Konzentration, für die Deckschicht (C) eine Folie mit besonders hoher Rauheit und niedrigem Glanz erhält.

Typische, den Mattgrad der Folie begünstigende und damit bevorzugte Partikel sind anorganische und/oder organische Partikel, beispielsweise Calciumcarbonat, amorphe Kieselsäure, Talk, Magnesiumcarbonat, Bariumcarbonat, Calciumsulfat, Lithiumphosphat, Calciumphosphat, Magnesiumphosphat, Aluminiumoxid, Lithiumfluorid, Calcium-, Barium-, Zink- oder Mangan-Salze der eingesetzten Dicarbonsäuren, Ruß, Kaolin oder vernetzte Polymerpartikeln, z. B. Polystyrol- oder Acrylat-Partikel.

Daneben können auch Mischungen von zwei oder mehreren verschiedenen Partikeln oder Mischungen von Partikeln mit gleicher chemischer Zusammensetzung, aber unterschiedlicher Partikelgröße gewählt werden. Die Partikel können den Polymeren der matten Deckschicht (C) der Folie in den jeweils vorteilhaften Konzentrationen, z. B. als glykolische Dispersion während der Polykondensation oder über Masterbatche bei der Extrusion, zugegeben werden.

Bevorzugte Partikel sind synthetisch hergestellte $SiO_2$-Partikel, auch Silikagel genannt (in kolloidaler Form), da diese Partikel sehr gut in die Polymermatrix eingebunden werden. Durch Kontrolle des Waschwasser-pH-Wertes und der Trocknungsbedingungen bei der Herstellung der $SiO_2$-Partikel können die wichtigen physikalischen Parameter wie z. B. Porenvolumen, Porengröße und die Größe der Oberfläche des anfallenden Silikagels variiert werden. Die gewünschte Partikelgröße (z. B. den $d_{50}$-Wert) erhält man durch geeignete Mahlung des Silikagels (z. B. mechanisch oder hydromechanisch). Hersteller solcher Partikel sind z. B. die Firmen Grace (USA), Fuji (Japan), Degussa (Deutschland) oder Ineos (Großbritannien).

**Weißpigment**

Zur Erzielung der vorgenannten Eigenschaften, insbesondere des gewünschten Weißgrades der Folie, werden in die Basisschicht (B) und in die Deckschicht (C) die notwendigen Weißpigmente eingearbeitet. In Frage kommen z. B. Titandioxid, Bariumsulfat, Zinksulfid oder Zinkoxid. In bevorzugter Weise wird $TiO_2$ als alleiniges weißfärbendes Pigment verwendet. Es wird in der bevorzugten Ausführungsform als Extrusionsmasterbatch dem Originalrohstoff (Polyester) zugegeben. Typische Bereiche für die $TiO_2$-Konzentration im Extrusionsmasterbatch sind 20 bis 70 Gew.-%. Das Titandioxid kann sowohl vom Rutil-Typ als auch vom Anatas-Typ oder eine Mischung aus Rutil- und Anatas-Typ sein. Vorzugsweise wird in der Basisschicht (B) und in der Deckschicht (C) Titandioxid vom Rutil-Typ verwendet. Die Korngröße des Titandioxids liegt in der Regel zwischen 0,05 und 0,5 $\mu$m, bevorzugt zwischen 0,1 und 0,3 $\mu$m. Die Folie erhält durch die eingearbeiteten Pigmente in den vorgesehenen Konzentrationen ein brillantes weißes Aussehen.

Zu einer weiteren Steigerung des Weißgrades können in einer bevorzugten Ausführungsform geeignete optische Aufheller der Basisschicht und/oder den anderen Schichten zugesetzt werden. Geeignete optische Aufheller sind beispielsweise Hostalux® KS der Firma Clariant oder Eastobrite® OB-1 der Firma Eastman.

Erfindungsgemäß ist die Folie dreischichtig und umfasst die Basisschicht B, die siegelfähige Deckschicht A und die weiße matte Deckschicht C (A-B-C). Gegebenenfalls wird die Deckschicht C einer funktionsvermittelnden Behandlung (z. B. Corona, Flamme) unterworfen oder funktionsvermittelnd beschichtet.

Die siegelfähige Deckschicht A enthält in einer bevorzugten Ausführungsform weniger als 0,5, bevorzugt weniger als 0,01 Gew.-% (bezogen auf die Masse der Deckschicht A), insbesondere gar keine externen, d. h. dem fertigen Polyester zugesetzte Partikel. In diesem Fall ist die Siegelung gegenüber sich selbst und gegenüber den oben gelisteten Materialien am besten. Zwischen der Siegelschicht A und dem Substrat bilden sich keine Bläschen, und die Siegelung ist vollflächig. Im anderen Fall bilden sich z. B. durch die Spitzen der Füllstoffe Hohlräume, die die Siegelung verschlechtern und zu optischen Defekten in der aufkaschierten Folie führen.

**Basisschicht (B)**

Die Basisschicht (B) der Folie enthält bevorzugt mindestens 80 Gew.-% thermoplastischen Polyester, insbesondere mindestens 90 Gew.-%, thermoplastischen Polyester, bezogen auf das Gesamtgewicht dieser Schicht. Dafür geeignet sind z. B. Polyester aus Ethylenglykol und Terephthalsäure (= Polyethylenterephthalat, PET), aus Ethylenglykol- und Naphthalin-2,6-dicarbonsäure (= Polyethylen-2,6-naphthalat, PEN), aus 1,4-Bis-hydroxymethyl-cyclohexan und Terephthalsäure [= Poly(1,4-cyclohexandimethylenterephthalat), PCDT] sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 Mol-%, insbesondere zu mindestens 95 Mol-%, aus Ethylenglykol- und Terephthalsäure-Einheiten oder aus Ethylenglykol- und Naphthalin-2,6-dicarbonsäure-Einheiten bestehen. In einer ganz bevorzugten Ausführungsform, besteht die Basisschicht aus Polyethylenterephthalat-Homopolymer. Die restlichen Monomereinheiten stammen aus anderen aliphatischen, cycloaliphatischen oder aromatischen Diolen bzw. anderen Dicarbonsäuren.

Geeignete andere aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt (Propan-1,3-diol, Butan-1,4-diol, Pentan-1,5-diol und Hexan-1,6-diol) oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen.

Die Herstellung der Polyester kann z. B. nach dem bekannten Umesterungsverfahren erfolgen. Dabei geht man von Dicarbonsäureestern und Diolen aus, die mit den üblichen Umesterungskatalysatoren wie Zink-, Calcium-, Lithium-, Magnesium- und Mangan-Salzen umgesetzt werden. Die Zwischenprodukte werden dann in Gegenwart allgemein üblicher Polykondensationskatalysatoren wie Antimontrioxid oder Titan-Salzen polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Die Basisschicht (B) enthält außerdem ein Weißpigment in einer Konzentration von 3 bis 15 Gew.-%, bevorzugt von 4 bis 14 Gew.-% und besonders bevorzugt von 5 bis 13 Gew.-%.

Siegelfähige Deckschicht (A):

Die bevorzugt durch Coextrusion auf die Basisschicht B aufgebrachte siegelfähige Deckschicht A besteht bevorzugt im wesentlichen aus Copolyestern, die überwiegend aus Isophthal- und Terephthalsäure-Einheiten und aus Ethylenglykol-Einheiten zusammengesetzt sind. Die restlichen Monomereinheiten stammen aus anderen aliphatischen, cycloaliphatischen oder aromatischen Diolen bzw. Dicarbonsäuren wie sie auch in der Basisschicht vorkommen können. Die bevorzugten Copolyester, die die gewünschten Siegeleigenschaften bereitstellen, sind solche, die aus Etylenterephthalat- und Ethylenisophthalat-Einheiten aufgebaut sind. Der Anteil an Ethylenterephthalat beträgt bevorzugt 70 bis 96 Mol-% und der entsprechende Anteil an Ethylenisophthalat 30 bis 4 Mol-%. Bevorzugt sind weiterhin Copolyester, bei denen der Anteil an Ethylenterephthalat 72 bis 94 Mol-% und der entsprechende Anteil an Ethylenisophthalat 28 bis 6 Mol-% beträgt, und ganz bevorzugt sind Copolyester, bei denen der Anteil an Ethylenterephthalat 74 bis 92 Mol-% und der entsprechende Anteil an Ethylenisophthalat 28 bis 8 Mol-% beträgt.

Die siegelfähige Deckschicht (A) hat gegenüber sich selbst eine Siegelanspringtemperatur von weniger als 110 °C, bevorzugt von weniger als 108 °C und besonders bevorzugt von weniger als 106 °C, und eine Siegelnahtfestigkeit (die Siegelnaht wird bei 130 °C hergestellt, die Siegelnahtfestigkeit bei 23 °C bestimmt) von mindestens 1,5 N/15 mm Folienbreite, bevorzugt von mindestens 1,6 N/15 mm Folienbreite und besonders bevorzugt von mindesten 1,7 N/15 mm Folienbreite.

Die besten Siegeleigenschaften der Folie erhält man, wenn dem Copolyester keine weiteren Additive, insbesondere keine anorganischen oder organischen Füllstoffe (Partikel, Pigmente), zugegeben werden. In diesem Fall erhält man bei vorgegebenem Copolyester und vorgegebener Schichtdicke die niedrigste Siegelanspringtemperatur und die höchste Siegelnahtfestigkeit.

Falls der siegelfähigen Deckschicht A geringste Mengen an Antiblockmitteln (Partikel) zugegeben werden, so hat es sich als günstig erwiesen, die gleichen Antiblockmittel (Partikel) wie für die Deckschicht C zu verwenden.

Matte Deckschicht (C):

Für die andere, im Sinne der Erfindung nicht siegelfähige Deckschicht C können prinzipiell die gleichen Polymere verwendet werden wie sie zuvor für die Basisschicht B beschrieben wurden.

Die Basisschicht B sowie die Deckschichten A und C können zusätzlich übliche Additive wie beispielsweise UV-Stabilisatoren, Hydrolysestabilisatoren, Antiblockmittel (z. B. über das Regenerat) enthalten. Diese Additive werden zweckmäßig dem Polymer bzw. der Polymermischung bereits vor dem Aufschmelzen zugesetzt. Als Stabilisatoren werden vorteilhaft beispielsweise Phosphorverbindungen wie Phosphorsäureester eingesetzt.

Die Gesamtdicke der erfindungsgemäßen Polyesterfolie kann innerhalb weiter Grenzen variieren. Sie liegt in der Regel im Bereich von 10 bis 350 $\mu$m, insbesondere von 12 bis 300 $\mu$m, vorzugsweise von 15 bis 250 $\mu$m. Die Dicken der Deckschichten A und C sind gleich oder verschieden und liegen üblicherweise im Bereich von 0,5 bis 10 $\mu$m, bevorzugt 0,8 bis 9,0 $\mu$m und besonders bevorzugt zwischen 1,0 und 8,0 $\mu$m.

Die erfindungsgemäße Folie hat folgende bevorzugte Eigenschaften:

1. Der Glanz der Folienoberfläche C, gemessen bei einem Einfallswinkel von 60°, ist niedriger als 50. In einer bevorzugten Ausführungsform beträgt der Glanz dieser Seite weniger als 45 und in einer besonders bevorzugten Ausführungsform weniger als 40.

2. Der Weißgrad der Folie, gemessen wurde der Weißgrad nach Berger, ist größer als 75, bevorzugt größer als 80 und besonders bevorzugt größer als 85.

3. Die Transparenz der Folie ist niedriger als 50, bevorzugt niedriger als 45 und besonders bevorzugt niedriger als 40.

4. Die Rauigkeit ($R_a$) der C-Seite liegt zwischen 150 und 1000 nm, bevorzugt zwischen 175 und 950 nm und besonders bevorzugt zwischen 200 und 900 nm.

5. Die Anzahl der Erhebungen der C-Seite, die größer als 1,5 $\mu$m/mm$^2$ sind, liegen bei größer 100 und kleiner 1500, bevorzugt bei größer 150 und kleiner 1250 und besonders bevorzugt bei größer 200 und kleiner 1000.

6. Der Reibungskoeffizient (COF) C-Seite gegen C-Seite ist <0,50, bevorzugt <0,45 und besonders bevorzugt <0,40.

Die Erfindung betrifft auch ein Verfahren zur Herstellung der erfindungsgemäßen Polyesterfolie nach dem aus der Literatur bekannten Coextrusionsverfahren.

Im Rahmen dieses Verfahrens wird so vorgegangen, dass die den einzelnen Schichten (A), (B) und (C) der Folie entsprechenden Schmelzen durch eine Flachdüse coextrudiert und zu Schmelzefilmen ausgeformt werden, die so erhaltene Folie zur Verfestigung auf einer oder mehreren Walze/n abgezogen wird, die Folie anschließend biaxial gestreckt (orientiert), die biaxial gestreckte Folie thermofixiert und anschließend aufgewickelt wird.

Die biaxiale Streckung (Orientierung) wird im Allgemeinen aufeinanderfolgend durchgeführt, wobei die aufeinanderfolgende biaxiale Streckung, bei der zuerst längs (in Maschinenrichtung) und dann quer (senkrecht zur Maschinenrichtung) gestreckt wird, bevorzugt ist.

Zunächst werden, wie beim Coextrusionsverfahren üblich, das Polymere bzw. die Polymermischungen für die einzelnen Schichten in je einem Extruder komprimiert und verflüssigt, wobei die gegebenenfalls als Zusätze vorgesehenen Additive bereits im Polymer bzw. in der Polymermischung enthalten sein können. Bevorzugt werden diese Additive in Form von Masterbatches dem Ausgangspolymer zugesetzt. Die Schmelzen werden dann gleichzeitig durch eine Flachdüse (Breitschlitzdüse) gepresst, und die ausgepresste mehrschichtige Schmelze wird auf einer oder mehreren Abzugswalzen abgezogen, wobei die Schmelze abkühlt und sich zu einer Vorfolie verfestigt.

Die biaxiale Streckung wird im allgemeinen sequentiell durchgeführt. Dabei wird die Vorfolie vorzugsweise zuerst in Längsrichtung (d. h. in Maschinenrichtung = MD-Richtung) und anschließend in Querrichtung (d. h. senkrecht zur Maschinenrichtung = TD-Richtung) gestreckt. Dies führt zu einer räumlichen Ausrichtung (Orientierung) der Polymerketten. Das Strecken in Längsrichtung lässt sich mit Hilfe zweier entsprechend dem angestrebten Streckverhältnis verschieden schnell rotierender Walzen durchführen. Zum Querstrecken benutzt man allgemein einen entsprechenden Kluppenrahmen, in den die Folie an beiden Rändern eingespannt und dann bei erhöhter Temperatur nach beiden Seiten gezogen wird.

Die Temperatur, bei der die Streckung durchgeführt wird, kann in einem relativ großen Bereich variieren und richtet sich nach den gewünschten Eigenschaften der Folie. Im Allgemeinen wird die Längsstreckung bei einer Temperatur im Bereich von 80 bis 130 °C und die Querstreckung im Bereich von 80 bis 150 °C durchgeführt. Das Längsstreckverhältnis liegt allgemein im Bereich von 2,5:1 bis 5:1, bevorzugt von 3:1 bis 4,5:1. Das Querstreckverhältnis liegt allgemein im Bereich von 3,0:1 bis 5,0:1, bevorzugt von 3,5:1 bis 4,5:1. Vor der Querstreckung kann man eine oder beide Oberflächen der Folie nach den bekannten Verfahren in-line beschichten.

Bei der nachfolgenden Thermofixierung wird die Folie über eine Zeitdauer von 0,1 bis 10 s bei einer Temperatur von 180 bis 250 °C gehalten. Anschließend wird die Folie in üblicher Weise aufgewickelt.

Wie eingangs bereits erwähnt kann mindestens eine Folienoberfläche funktionsvermittelnd beschichtet und/oder behandelt werden.

So kann der Kontaktwinkel dieser Oberfläche zu Wasser dann ≤ 64°, bevorzugt ≤ 62° und besonders bevorzugt ≤ 60° betragen. Solche Oberflächen weisen insbesondere ein erhöhtes Haftvermögen gegenüber anderen Materialien wie Druckfarben, Kaschierklebern etc. auf.

Dies wird beispielsweise durch eine Corona- bzw. Flammbehandlung erreicht, die sich üblicherweise an die Thermofixierung der Folie anschließt. Ebenso kann die Behandlung an anderen Stellen im Folienherstellprozess, beispielsweise nach der Längsstreckung, erfolgen.

Alternativ oder zusätzlich zu der oben beschriebenen Oberflächenbehandlung kann die Folie auf einer (oder beiden) Oberfläche(n) mit einer funktionalen Beschichtung beschichtet werden, so dass die Beschichtung auf der fertigen Folie eine Dicke von bevorzugt 5 bis 2000 nm, insbesondere 20 bis 500 nm und besonders bevorzugt 30 bis 200 nm, aufweist. Die Beschichtung wird bevorzugt in-line aufgebracht, d. h. während des Folienherstellprozesses, zweckmäßigerweise vor der Querstreckung. Besonders bevorzugt ist die Aufbringung mittels des "Reverse gravure-roll coating"-Verfahrens, bei dem sich die Beschichtung äußerst homogen in Schichtdicken bis 200 nm auftragen lassen. Ebenfalls bevorzugt ist die Auftragung durch das Meyer-Rod-Verfahren, mit dem sich größere Beschichtungsstärken erzielen lassen. Die Beschichtungen werden bevorzugt als Lösungen, Suspensionen oder Dispersionen aufgetragen, besonders bevorzugt als wässrige Lösung, Suspension oder Dispersion. Die genannten Beschichtungen verleihen der Folienoberfläche eine zusätzliche Funktion; beispielsweise wird die Folie dadurch bedruckbar, metallisierbar, sterilisierbar, antistatisch, oder sie verbessern z. B. die Aromabarriere oder ermöglichen die Haftung zu Materialien, die ansonsten nicht auf der Folienoberfläche haften würden.

Beispiele für Stoffe/Zusammensetzungen, die zusätzliche Funktionalität verleihen, sind: Acrylate, wie sie beispielsweise beschrieben sind in der WO 94/13476, Ethylenvinylalkohole, PVDC, Wasserglas ($Na_2SiO_4$), hydrophile Polyester (5-Na-sulfoisophthalsäurehaltiger PET/IPA-Polyester, wie sie beispielsweise beschrieben sind in der EP-A-0 144 878, US-A-4,252,885 oder EP-A-0 296 620), Polyvinylacetate, wie sie beispielsweise beschrieben sind in der WO 94/13481, Polyurethane, Alkali- oder Erdalkalisalze von $C_{10}$-$C_{18}$-Fettsäuren, Butadiencopolymere mit Acrylnitril oder

EP 1 902 839 B1

Methylmethacrylat, Methacrylsäure oder deren Ester.

Die genannten Stoffe/Zusammensetzungen werden als verdünnte Lösung, Emulsion oder Dispersion, vorzugsweise als wässrige Lösung, Emulsion oder Dispersion, auf eine oder beide Folienoberflächen aufgebracht, und anschließend wird das Lösungsmittel verflüchtigt. Werden die Beschichtungen in-line vor der Querstreckung aufgebracht, reicht gewöhnlich die Temperaturbehandlung in der Querstreckung und anschließenden Hitzefixierung aus, um das Lösungsmittel zu verflüchtigen und die Beschichtung zu trocknen.

In einer bevorzugten Ausführungsform der Erfindung wird eine Copolyesterbeschichtung zur Erzielung der besseren Haftung verwendet. Die bevorzugten Beschichtungscopolyester werden durch Polykondensation von

(1) Isophthalsäure,
(2) einer aliphatischen Dicarbonsäure mit der Formel

$$HOOC(CH_2)_nCOOH,$$

wobei n im Bereich von 1 bis 11 liegt,
(3) einem Sulfomonomeren enthaltend eine Alkalimetallsulfonatgruppe an dem aromatischen Teil einer aromatischen Dicarbonsäure und
(4) wenigstens einem aliphatischen oder cycloaliphatischen Alkylenglykol mit etwa 2 bis 11, bevorzugt 2 bis 8, besonders bevorzugt 2 bis 6 Kohlenstoffatomen hergestellt.

Die insgesamt anwesenden Säureäquivalente sollen auf molarer Basis im Wesentlichen den insgesamt anwesenden Glykoläquivalenten entsprechen. Diese Copolyesterbeschichtung wird im Detail z. B. in der EP-A-0 144 878 beschrieben.

In einer weiteren bevorzugten Ausführungsform der Erfindung wird eine Acrylatbeschichtung zur Erzielung der besseren Haftung verwendet. Die bevorzugt verwendeten Acrylcopolymere bestehen im wesentlichen aus mindestens 50 Gew.-% eines oder mehrerer polymerisierter acrylischer und/oder methacrylischer Monomerer und 1 bis 15 Gew.-% eines copolymerisierbaren Comonomeren, das in copolymerisiertem Zustand unter Einwirkung von erhöhter Temperatur, gegebenenfalls ohne Zusatz eines gesonderten harzförmigen Venetzungsmittels, zur Ausbildung von intermolekularen Vernetzungen befähigt ist. Besonders geeignete Copolymere sind beispielsweise in der WO 94/13476 beschrieben.

In einer weiteren bevorzugten Ausführungsform der Erfindung wird eine wasserlösliche oder hydrophile Beschichtung zur Erzielung einer besseren Haftung mit hydrophilen Schichten oder Druckfarben verwendet. Die bevorzugte hydrophile Beschichtung kann auf drei Weisen erzielt werden:

1. eine Mischung aus einem aromatischen Copolyester (I-1) mit einer in Wasser dispergierbaren funktionellen Gruppe und einem Polyvinylalkohol (II-1),
2. eine Mischung aus einem aromatischen Copolyester (I-2) mit einer in Wasser dispergierbaren funktionellen Gruppe und einem Polyglycerolpolyglycidylether (II-2) oder
3. eine Mischung aus einem wässrigen Polyurethan (I-3) und einem Polyvinylalkohol (II-3).

Die aromatischen Copolyester (I-1 und I-2) werden aus aromatischen Dicarbonsäuren wie zum Beispiel Terephthalsäure, 2,6-Naphthalindicarbonsäure oder Isophthalsäure, gegebenenfalls verzweigten oder kondensierten aliphatischen Diolen wie z. B. Ethylenglykol, Diethylenglykol, 2-Methylpropanol oder 2,2-Dimethylpropanol sowie einer esterbildenden Verbindung, die eine in Wasser dispergierbare funktionelle Gruppe trägt, hergestellt. Beispiele für die funktionellen Gruppen sind: Hydroxyl-, Carboxyl-, Sulfonsäure- oder Phosphorsäure-Gruppen bzw. deren Salze. Bevorzugt sind Sulfonsäure- und Carbonsäure-Salze. Als Polyvinylalkohol-Komponente (II-1 und II-3) kann jeder Polyvinylalkohol verwendet werden, der wasserlöslich und mit normalen Polymerisationstechniken herstellbar ist. Generell werden solche Polyvinylalkohole durch die Verseifung von Polyvinylacetaten hergestellt. Der Verseifungsgrad sollte bevorzugt mindestens 70 %, besser jedoch 80 bis 99,9 %, betragen. Als Polyglycerolpolyglycidylether (II-2) werden Reaktionsprodukte von Glycerin und Epichlorhydrin mit Molekulargewichten zwischen ca. 250 und 1200 g/mol verwendet. Das wässrige Polyurethan (I-3) wird aus einem Polyol wie zum Beispiel Polyester mit Glykol-Endgruppen, Polyoxyethylenglykol, Polyoxypropylenglykol, Polyoxytetramethylenglykol oder acrylische Polylole und einem Diisocyanat wie zum Beispiel Xyloldiisocyanat, Hexamethylendiisocyanat, 4,4'- Dicyclohexylmethandiisocyanat, Toluidindiisocyanat, Phenylendiisocyanat, 4,4'- Diphenylmethandiisocyanat und 1,5-Naphthalindiisocyanat hergestellt.

In einer weiteren bevorzugten Ausführungsform der Erfindung besteht die haftvermittelnde Schicht aus dem Hydrolyseprodukt eines aminofunktionalen Silans, welches die Folie zusätzlich dampfsterilisierfest macht (ein Laminat z. B. aus Folie, Beschichtung, Kleber oder aufgebrachten metallischen und keramischen Schichten delaminiert nicht) und darüber hinaus für die direkte Extrusionsbeschichtung mit Polymeren aufnahmebereit macht.

Die oben beschriebene erfindungsgemäße Beschichtung ist ausführlich in der EP-B-0 359 017 (Seiten 3 bis 5) dargestellt, auf die an dieser Stelle ausdrücklich Bezug genommen wird. Diese Schrift gibt auch Auskunft über weitere spezifische Kombinationen solcher hydrolisierbaren Aminosilane.

Die bevorzugten Copolyester-, Acrylat- und Silan- Beschichtungen können weiterhin andere bekannte Zusätze enthalten wie z. B. Antistatika, Netzmittel, Tenside, pH-Regulatoren, Antioxidantien, Farbstoffe, Pigmente, Anti-Blockmittel, wie z. B. kolloidales $SiO_2$, usw.

**Vorteile der Erfindung**

Die erfindungsgemäße Folie zeichnet sich durch eine sehr gute Optik aus, d. h. die Folie hat einen niedrigen Glanz, niedrige Transparenz und einen hohen Weißgrad. Weiterhin zeichnet sich die Folie durch eine hervorragende Siegelfähigkeit aus. Die siegelfähige Deckschicht A siegelt gegen sich selbst, gegen die nicht siegelfähige Deckschicht C und gegen Substrate aus APET, A/CPET , CPET oder Metall (z. B. Aluminium, Stahl, lackierter Stahl, verchromter oder verzinnter Stahl), und die Folie ist damit in vielen Bereichen einsetzbar wie z. B. als Deckelfolie für (Menü)-Schalen, Beutel oder als Deckschicht auf Blechen.

Daneben ist bei der Herstellung der Folie gewährleistet, dass das Verschnittmaterial (Regenerat) in einer Menge im Bereich von 20 bis 60 Gew.-%, bezogen auf das Gesamtgewicht der Folie, wieder der Extrusion zugeführt werden kann, ohne dass dabei die physikalischen und optischen Eigenschaften der Folie nennenswert negativ beeinflusst werden, insbesondere nicht ihr optisches Erscheinungsbild.

Die nachstehende Tabelle (Tabelle 1) fasst die wichtigsten erfindungsgemäßen Folieneigenschaften noch einmal zusammen.

**Tabelle 1**

| Basisschicht B | | | | | |
|---|---|---|---|---|---|
| | bevorzugter Bereich | besonders bevorzugt | ganz besonders bevorzugt | Einheit | Messmethode |
| Konzentration an weiß färbendem Füllstoff | 3 bis 15 | 4 bis 14 | 5 bis 13 | Gew.-% | |
| **Deckschicht A (Siegelschicht)** | | | | | |
| Konzentration an externen Partikeln | ≤ 0,5 | ≤0,01 | 0 | Gew.-% | intern |
| Dicke der Deckschicht A | 0,5 bis 10 | 0,8 bis 9,0 | 1,0 bis 8,0 | $\mu$m | |
| Isophthalatgehalt des Polymers | 4 bis 30 | 6 bis 28 | 8 bis 26 | Mol-% | |
| **Deckschicht C (matte weiße Schicht)** | | | | | |
| Konzentration an Weißpigment | 1 bis 15 | 2 bis 14 | 3 bis 13 | Gew.-% | intern |
| Isophthalatgehalt des Polymers | 4 bis 30 | 6 bis 28 | 8 bis 26 | Mol-% | |
| Follstoffkonzentration des weiteren Pigments | 1 bis 7 | 1,5 bis 6,5 | 2 bis 6 | Gew.-% | |
| Partikeldurchmesser $d_{50}$ des weiteren Pigments | 2 bis 10 | 2,2 bis 9,0 | 2,4 bis 8,0 | $\mu$m | wie beschrieben |
| Mittlere Rauigkeit $R_a$ der matten C-Seite | 150 bis 1000 | 175 bis 950 | 200 bis 900 | Nm | DIN 4768 |
| Reibungswert COFC- Seite gegen C-Seite | <0,5 | <0,45 | <0,40 | | DIN 53375 |

(fortgesetzt)

| Deckschicht C (matte weiße Schicht) | | | | | |
| --- | --- | --- | --- | --- | --- |
| Topographie | >100, <1500 | >150, < 1250 | > 200, <1000 | Erhebungen pro mm$^2$ | wie beschrieben |
| Dicke der Deckschicht C | 0,5 bis 10,0 | 0,8 bis 9,0 | 1,0 bis 8,0 | $\mu$m | |
| Glanz der Deckschicht C bei 60° | <50 | <45 | <40 | | DIN 67530 |
| Eigenschaften der Folie | | | | | |
| | bevorzugter Bereich | besonders bevorzugt | ganz besonders bevorzugt | Einheit | Messmethode |
| Dicke der Folie | 10 bis 350 | 12 bis 300 | 15 bis 250 | $\mu$m | |
| Weißgrad der Folie nach Berger | >75 | >80 | >85 | | s. Beschreibung |
| Transparenz der Folie | <50 | <45 | <40 | % | ASTM-D 1003-00 |
| Mindestsiegeltemperatur von DS A gegenüber sich selbst | <110 | <108 | <106 | °C | intern |
| Siegelnahtfestigkeit von DS A gegenüber sich selbst | ≥1,5 | ≥1,6 | ≥1,7 | N/15 mm | intern |
| Kontaktwinkel von Wasser auf behandelter Oberfläche | ≤64 | ≤62 | ≤60 | ° | wie beschrieben |
| DS= Deckschicht | | | | | |

Zur Charakterisierung der Rohstoffe und der Folien wurden im Rahmen der vorliegenden Erfindung die folgenden Messmethoden benutzt:

**Messung des mittleren Partikeldurchmessers $d_{50}$**

Die Bestimmung des mittleren Partikeldurchmessers $d_{50}$ wird mittels Laser auf einem Master Sizer (Malvern Instruments, UK) nach der Standardmethode durchgeführt (andere Messgeräte sind z. B. Horiba LA 500 (Horiba Ltd., Japan) oder Helos (Sympatec GmbH, Deutschland), welche das gleiche Messprinzip verwenden). Die Proben werden dazu in eine Küvette mit Wasser gegeben und diese dann in das Messgerät gestellt. Der Messvorgang ist automatisch und beinhaltet auch die mathematische Bestimmung des $d_{50}$-Wertes. Der $d_{50}$-Wert wird dabei definitionsgemäß aus der (relativen) Summenkurve der Partikelgrößenverteilung bestimmt: Der Schnittpunkt des 50 Gew.-%-Ordinatenwertes mit der Summenkurve liefert auf der Abszissenachse den gewünschten $d_{50}$-Wert.

**Siegelnahtfestigkeit gegenüber sich selbst (= FIN-Siegelung)**

Zur Bestimmung der Siegelnahtfestigkeit werden zwei 15 mm breite Folienstreifen übereinandergelegt und bei 130 °C, einer Siegelzeit von 0,5 s und einem Siegeldruck von 2 bar (Gerät: Brugger Typ NDS, einseitig beheizte Siegelbacke) versiegelt. Die Siegelnahtfestigkeit wird nach der T-Peel-Methode bestimmt = 2 90°.

**Bestimmung der Mindestsiegeltemperatur gegenüber sich selbst**

Mit dem Siegelgerät HSG/ET der Firma Brugger werden heißgesiegelte Proben (Siegelnaht 20 mm x 100 mm) hergestellt, wobei die Folie bei unterschiedlichen Temperaturen mit Hilfe zweier beheizter Siegelbacken bei einem Siegeldruck von 2 bar und einer Siegeldauer von 0,5 s gesiegelt wird. Aus den gesiegelten Proben werden Prüfstreifen von 15 mm Breite geschnitten. Die T-Siegelnahtfestigkeit wird wie bei der Bestimmung der Siegelnahtfestigkeit gemessen. Die Mindestsiegeltemperatur ist die Temperatur, bei der eine Siegelnahtfestigkeit von mindestens 0,5 N/15 mm erreicht wird.

**Glanz**

Der Glanz wird nach DIN 67530 bestimmt. Gemessen wird der Reflektorwert als optische Kenngröße für die Oberfläche einer Folie. Angelehnt an die Normen ASTM-D 523-78 und ISO 2813 wird der Einstrahlwinkel mit 20° eingestellt.

**SV-Wert (Standard Viscosity)**

Die Standardviskosität SV (DCE) wird, angelehnt an DIN 53726, bei 25°C in Dichloressigsäure gemessen. Die intrinsische Viskosität (IV) von Polyethylenterephthalat berechnet sich wie folgt aus der Standardviskosität

$$IV = [\eta] = 6,907 \cdot 10^{-4} \, SV \, (DCE) + 0,063096 \, [dl/g]$$

**Topographie**

Die Topographie der Oberfläche wird mit einem Weißlicht-Interferometrie-Mikroskop der Firma Veeco, Typ Wyko NT3300, bestimmt. Gemessen wird eine Fläche von 0,92 mm x 1,21 mm (480 x 736 Pixel) bei 5,1-facher Vergrößerung. Zur Messung wird die Probe in einen Ring (Durchmesser 40 mm) eingespannt Die Messung erfolgt im VSI-Modus (phase shifting interferometry). Die Messlänge in z-Richtung wird auf 20 $\mu$m festgelegt. Eine eventuelle Welligkeit des Musters wird herausgefiltert.

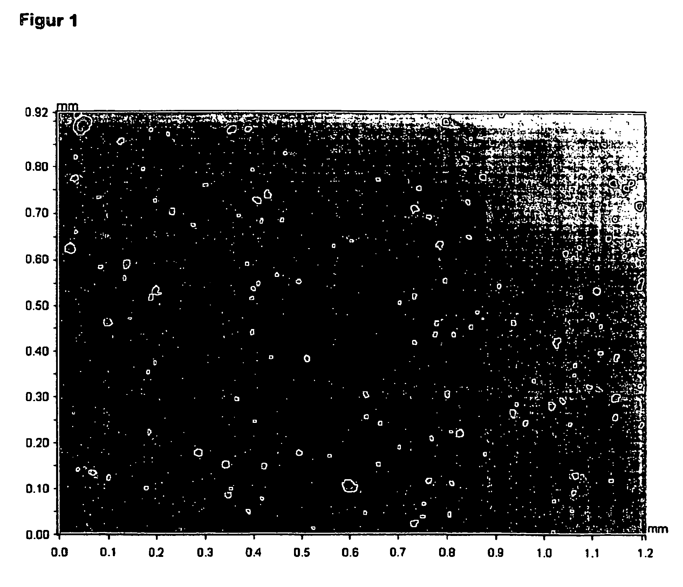

Zur Analyse der Erhebungen wird die so genannte Multi Region Analysis verwendet. Hierbei wird die Messfläche nach zusammenhängenden Regionen untersucht, die höher als 1,5 $\mu$m sind. Allerdings werden nur Regionen berücksichtigt, die eine Größe von mindestens 5 Bildpunkten haben. Ein Beispiel ist in Figur 1 gezeigt.

**Rauigkeit R$_a$**

Die Rauigkeit R$_a$ wird nach DIN 4762 mit einem Cut off von 0,25 mm bestimmt.

**Weißgrad**

Der Weißgrad wird nach Berger bestimmt, wobei in der Regel mehr als 20 Folienlagen aufeinander gelegt werden. Die Bestimmung des Weißgrades erfolgt mit Hilfe des elektrischen Remissionsphotometers ELREPHO® der Firma Zeiss, Oberkochem (Deutschland), Normlichtart C, 2°-Normalbeobachter. Der Weißgrad WG wird als

$$WG = RY + 3RZ - 3RX$$

definiert, wobei RX, RY, RZ entsprechende Reflexionsfaktoren bei Einsatz eines X-, Y-, Z-Farbmessfilters sind. Als Weißstandard wird ein Pressling aus Bariumsulfat (DIN 5033, Teil 9) verwendet. Eine ausführliche Beschreibung ist z. B. in Hansl Loos, Farbmessung, Verlag Beruf und Schule, Itzehoe (1989) beschrieben.

**Transparenz**

Die Transparenz wird gemäß ASTM D1003-61 Methode A bestimmt.

**Kontaktwinkel mit Wasser**

Die Polarität der Oberfläche wird durch eine Randwinkelmessung von destilliertem Wasser bestimmt. Die Messung findet bei 23 °C und 50 % r. F. statt. Mittels einer Dosierspritze wird ein 1 bis 2 mm breiter Tropfen destilliertes Wasser auf die Folienoberfläche aufgebracht. Da die Messung bedingt durch Wärmezufuhr der Beleuchtung (Verdunstung), Aufladung oder Spreizverhalten zeitabhängig ist, verbleibt die Nadel in dem Tropfen, so dass der Tropfen während der Messung vorsichtig vergrößert und dann sofort mittels eines Goniometerokulars der Kontaktwinkel abgelesen wird (Messung des Fortschreitwinkels). Aus 5 Messungen wird der Mittelwert gebildet. Die Messung wird durchgeführt an einem Goniometer G1 der Firma Krüss, Hamburg, DE.

Im Folgenden wird die Erfindung anhand von Beispielen näher erläutert.

**Beispiel 1**

Zur Herstellung der nachfolgend beschriebenen Folie wurden folgende

Ausgangsmaterialien verwendet:

Deckschicht (A)

100 Gew.-% Polyesterrohstoff, bestehend aus Copolyester aus 78 Mol-% Terephthalsäure, 22 Mol-% Isophthalsäure und 100 Mol-% Ethylenglykol mit einem SV-Wert von 800

Basisschicht (B)

80 Gew.-% Polyethylenterephthalat mit einem SV-Wert von 800

20 Gew.-% Masterbatch der Fa. Sukano (Schindellegi, CH) mit 50 Gew.-% Rutil-Titandioxid (mittlerer Teilchendurchmesser Titandioxid ca. 0,3 $\mu$m) und 50 Gew.-% Polyethylenterephthalat mit einem SV-Wert von 800

Deckschicht (C)

65 Gew.-% Polyesterrohstoff, bestehend aus 95 Gew.-% (Copolyester aus 78 Mol-% Terephthalsäure, 22 Mol-% Isophthalsäure und 100 Mol-% Ethylenglykol) und 5,0 Gew.-% Kieselsäurepartikel (Sylysia 430 von der Fa. Fuji, JP) mit einem $d_{50}$-Wert von 3,4 $\mu$m und einem SV-Wert von 800

15 Gew.-% Polyesterrohstoff, bestehend aus 97 Gew.-% Polyethylenterephthalat und 3,0 Gew.-% Kieselsäurepartikel (Sylysia 430 von der Fa. Fuji, JP) mit einem $d_{50}$-Wert von 3,4 $\mu$m und einem SV-Wert von 800

20 Gew.-% Masterbatch der Fa. Sukano (Schindellegi, CH) mit 50 Gew.-% Rutil-Titandioxid (mittlerer Teilchendurchmesser Titandioxid ca. 0,3 $\mu$m) und 50 Gew.-% Polyethylenterephthalat mit einem SV-Wert von 800

Die o.g. Rohstoffen der drei Schichten wurden jeweils in einem Extruder aufgeschmolzen und gemischt und durch eine Breitschlitzdüse auf eine gekühlte Abzugswalze extrudiert. Die so erhaltene amorphe Vorfolie wurde dann sequentiell biaxial gestreckt, fixiert und aufgerollt. Somit wurde eine dreischichtige Folie mit ABC-Aufbau und einer Gesamtdicke von 25 $\mu$m hergestellt. Die Dicke der jeweiligen Deckschichten (A) und (C) betrug jeweils 2 $\mu$m.

Die Herstellungsbedingungen in den einzelnen Verfahrensschritten waren:

| | | | |
|---|---|---|---|
| Extrusion | Temperaturen | A-Schicht: | 280 °C |
| | | B-Schicht: | 280 °C |
| | | C-Schicht: | 280 °C |
| | Temperatur der Abzugswalze | | 20 °C |
| Längsstreckung | Temperatur | | 70-120 °C |
| | Längsstreckverhältnis | | 3,2 |
| Querstreckung | Temperatur | | 80-135 °C |

(fortgesetzt)

| | Querstreckverhältnis | 3,8 |
|---|---|---|
| Fixierung | Temperatur | 230 °C |
| | Dauer | 3 s |

Es wurde eine Folie mit einem hohen Mattgrad, hoher Rauigkeit, hohem Weißgrad, niedriger Transparenz und sehr gutem Siegelverhalten erhalten.

**Beispiel 1a**

Es wurde eine Folie wie in Beispiel 1 beschrieben hergestellt mit dem Unterschied, dass nach der Fixierung eine Coronabehandlung (2 kW/m$^2$) an der weißen, matten Deckschicht durchgeführt wurde.

Es wurde eine Folie mit einem hohen Mattgrad, hoher Rauigkeit, hohem Weißgrad, niedriger Transparenz und sehr gutem Siegelverhalten erhalten. Die Folie hatte die gewünschte verbesserte Haftung, der Kontaktwinkel zu Wasser betrug 63,8°.

**Beispiel 1b**

Im Vergleich zu Beispiel 1 wurde ein Latex mit 4,5 Gew.-% Feststoffgehalt, bestehend aus einem Copolymeren aus 60 Gew.-% Methylmethacrylat, 35 Gew.-% Ethylacrylat und 5 Gew.-% N-Methylolacrylamid und einem Tensid, nach dem folgenden Verfahren als Haftvermittlerbeschichtung auf die C-Schicht der Polyesterfolie aufgebracht:

Die längsgestreckte Folie wurde coronabehandelt (8 kW/m$^2$) und danach durch Reversgravurbeschichtung auf der A-Schicht mit dem oben beschriebenen Latex beschichtet.

Die biaxial gestreckte Folie wurde bei 230 °C thermofixiert. Das Trockengewicht der Beschichtung betrug 0,035 g/m$^2$ bei einer Beschichtungsdicke von 39 nm.

Die wünschenswerten und erfindungsgemäßen Eigenschaften der Folie waren wie in Beispiel 1a. Der Kontaktwinkel zu Wasser betrug 64,0°. Die Folie wurde auf ihre reprografische Haftung geprüft und ergab eine gute Haftung.

**Beispiel 1c**

Die Folie wurde wie in Beispiel 1 b hergestellt. Eine wässrige Dispersion mit 6 Gew.-% Copolyester, bestehend aus 95 Mol-% Isophthalat, 5 Mol-% Na-5-Sulfoisoptalat und 100 Mol-% Ethylenglykol, und 0,56 Gew.-% kolloidalem SiO$_2$ wurde nach dem folgenden Verfahren als Beschichtung auf die Polyesterfolie aufgebracht:

Die längsgestreckte Folie wurde durch Reversgravurbeschichtung auf der A-Schicht mit der oben beschriebenen Copolyesterdispersion beschichtet.

Die biaxial gestreckte Folie wurde bei 230 °C thermofixiert. Das Trockengewicht der Beschichtung betrug 0,030 g/m$^2$ bei einer Beschichtungsdicke von 35 nm.

Die Siegeleigenschaften der Folie waren wie in Beispiel 1a. Der Kontaktwinkel zu Wasser betrug 57,0°.

Zwei Proben der so hergestellten einseitig beschichteten Folie wurden in einen Vakuumlaborbeschichter eingebracht, und zwar so, dass bei der einen Probe die beschichtete und bei der anderen die unbeschichtete Seite metallisiert wurde. Die Vakuumkammer wurde bis auf unter 10 Torr evakuiert, und von einem Wolframfaden wurden 500 Ä Aluminium sowohl auf die unbeschichtete Seite als auch auf die beschichtete Probe aufgedampft.

Innerhalb von 30 s nach Entnahme aus der Vakuumkammer wurde jede Probe auf "Metallabrieb" geprüft. Zu diesem Zweck wurde an jeder untersuchten Probe mit einem Baumwollvlies mit der gleichen Anzahl von Strichen und mit etwa dem gleichen Druck leicht über die Metalloberfläche gerieben. Das "Abriebverhalten" der beschichteten Seite der Folie wurde als gut bewertet.

**Beispiel 1d**

Die Folie wurde wie in Beispiel 1 b hergestellt. Eine wässrige Dispersion mit 7 Gew.-% Feststoffgehalt, bestehend aus 50 Gew.-% eines aromatischen Copolyesters (Copolyester enthaltend 90 Mol-% Terephthalat, 10 Mol-% 5-Natriumsulfoisophtalat, 80 Mol-% Ethylenglykol und 20 Mol-% Diethylenglykol), 45 Gew.-% eines wasserdispergierbaren Polymers (Polyvinylalkohol mit einem Verseifungsgrad von 88 Mol-% und einem Polymerisationsgrad von 1.700) und 5 Gew.-% an inerten Partikeln (kolloidales SiO$_2$ mit einem Partikeldurchmesser von 0,05 $\mu$m) wurde nach dem folgenden Verfahren als Beschichtung auf eine Polyesterfolie aufgebracht:

Die längsgestreckte Folie wurde durch Reversgravurbeschichtung mit der oben beschriebenen Copolyesterdispersion beschichtet. Das Trockengewicht der Beschichtung betrug 0,040 g/m$^2$ bei einer Beschichtungsdicke von 0,05 $\mu$m. Die Siegeleigenschaften der Folie waren wie in Beispiel 1 a. Der Kontaktwinkel zu Wasser betrug 49,9°:

Zur Beurteilung der Haftvermittlerwirkung der Beschichtung wurde eine wässrige Polyvinylacetal-Lösung (S-Lec KX-1, hergestellt von Sekisui Chemical Co., Ltd.; im folgenden als KX-1 bezeichnet) auf die beschichtete Folie aufgebracht und getrocknet. Die Beschichtungslösung hatte eine Konzentration von 8 Gew.-% und wurde mit einem Applikator vom Baker-Typ mit einer Schichtdicke von 127 $\mu$m aufgebracht. Die beschichtete Folie wurde unverzüglich zum Trocknen bei 100 °C für 4 min in einen Ofen gestellt. Ein schwarzes Quadrat (Fläche: 12 12 cm) wurde mit einem Ink-Jet-Drucker (BJC-600J, Canon Inc.) auf die Oberfläche der getrockneten KX-1-Beschichtung gedruckt und für 12 h bei 23 °C und 50 % relativer Luftfeuchtigkeit unter Luft getrocknet. Ein Klebeband (Cello-tape®, Nichiban Inc.; Breite: 18 mm) wurde auf die bedruckte Fläche geklebt und schnell abgezogen. Der Grad der mit dem Klebeband abgetrennten bedruckten Oberfläche wurde visuell bestimmt. Die beschichtete Folie zeigte gute Hafteigenschaften.

**Beispiel 2**

Im Vergleich zu Beispiel 1 wurde die Zusammensetzung der Deckschicht (C) und der Basisschicht (B) geändert. Die Gesamtdicke der Folie betrug 60 $\mu$m. Die Dicke der Deckschichten betrug jeweils 3 $\mu$m. Alle anderen Parameter wurden beibehalten.

Deckschicht (C)

| 14 Gew.-% | Masterbatch der Fa. Sukano (Schindellegi, CH) mit 50 Gew.-% Rutil-Titandioxid (mittlerer Teilchendurchmesser Titandioxid 0,3 $\mu$m) und 50 Gew.-% Polyethylenterephthalat mit einem SV-Wert von 800 |
| 30 Gew.-% | Polyesterrohstoff, bestehend aus 95 Gew.-% (Copolyester aus 78 Mol% Terephthalsäure, 22 Mol-% Isophthalsäure und 100 Mol-% Ethylenglykol) und 5 Gew.-% Kieselsäurepartikel (Sylysia 430 von der Fa. Fuji, JP) mit einem $d_{50}$-Wert von 3,4 $\mu$m und einem SV-Wert von 800 |
| 36 Gew.-% | Polyesterrohstoff, bestehend aus 95 Gew.-% (Polyester aus 99 Mol-% Terephthalsäure, 1 Mol-% Isophthalsäure und 100 Mol-% Ethylenglykol) und 5,0 Gew.-% Kieselsäurepartikel (Sylysia 430 von der Fa. Fuji, JP) mit einem $d_{50}$-Wert von 3,4 $\mu$m und einem SV-Wert von 800 |
| 20 Gew.-% | Polyethylenterephthalat mit einem SV-Wert von 800 |

Basisschicht (B):

| 86 Gew.-% | Polyethylenterephthalat mit einem SV-Wert von 800 |
| 14 Gew.-% | Masterbatch der Fa. Sukano (Schindellegi, CH) mit 50 Gew.-% Rutil-Titandioxid (mittlerer Teilchendurchmesser Titandioxid 0,3 $\mu$m) und 50 Gew.-% Polyethylenterephthalat mit einem SV-Wert von 800 |

Gegenüber Beispiel 1 haben sich die Transparenz und der Glanz verringert.

**Beispiel 3**

Im Vergleich zu Beispiel 1 wurde die Zusammensetzung der Deckschicht (C) und Basisschicht (B) geändert. Die Gesamtdicke der Folie betrug 50 $\mu$m. Die Dicke der Deckschichten betrug 2 $\mu$m. Alle anderen Parameter wurden beibehalten.

Deckschicht (C), Mischung aus:

| 10 Gew.-% | Masterbatch der Fa. Sukano (Schindellegi, CH) mit 50 Gew.-% Rutil-Titandioxid (mittlerer TeilchendurchmesserTitandioxid 0,3 $\mu$m) und 50 Gew.-% Polyethylenterephthalat mit einem SV-Wert von 800 |
|---|---|
| 50 Gew.-% | Polyesterrohstoff, bestehend aus 95 Gew.-% (Copolyester aus 78 Mol% Terephthalsäure, 22 Mol-% Isophthalsäure und 100 Mol-% Ethylenglykol) und 5,0 Gew.-% Kieselsäurepartikel (Sylysia 430 von der Fa. Fuji, JP) mit einem $d_{50}$-Wert von 3,4 $\mu$m und einem SV-Wert von 800 |
| 40 Gew.-% | Polyesterrohstoff, bestehend aus 95 Gew.-% (Polyester aus 99 Mol-% Terephthalsäure, 1 Mol-% Isophthalsäure und 100 Mol-% Ethylenglykol) und 5,0 Gew.-% Kieselsäurepartikel (Sylysia 430 von der Fa. Fuji, JP) mit einem $d_{50}$-Wert von 3,4 $\mu$m und einem SV-Wert von 800 |

Basisschicht (B):

| 90 Gew.-% | Polyethylenterephthalat mit einem SV-Wert von 800 |
|---|---|
| 10 Gew.-% | Masterbatch der Fa. Sukano (Schindellegi, CH) mit 50 Gew.-% Rutil-Titandioxid (mittlererTeilchendurchmesserTitandioxid 0,3 $\mu$m) und 50 Gew.-% Polyethylenterephthalat mit einem SV-Wert von 800 |

Gegenüber Beispiel 1 hat sich die Rauigkeit erhöht und der Glanz verringert.

**Vergleichsbeispiel 1**

Chips aus Polyethylenterephthalat (hergestellt über das Umesterungsverfahren mit Mn als Umesterungskatalysator, Mn-Konzentration: 100 ppm) wurden bei einer Temperatur von 150 °C auf eine Restfeuchte von unterhalb 100 ppm getrocknet und dem Extruder für die Basisschicht (B) zugeführt. Ebenfalls wurden Chips aus Polyethylenterephthalat und einem Füllstoff dem Extruder für die matt scheinende Deckschicht (C) zugeführt.

Daneben wurden Chips aus einem linearen Polyester hergestellt, der aus einem amorphen Copolyester (im folgenden mit Copolyester 1 bezeichnet) mit 78 Mol.-% Ethylenterephthalat und 22 Mol% Ethylenisophthalat besteht (hergestellt über das Umesterungsverfahren mit Mn als Umesterungskatalysator, Mn-Konzentration: 100 ppm). Der Copolyester I wurde bei einer Temperatur von 100 °C auf eine Restfeuchte von unterhalb 200 ppm getrocknet und dem Extruder für die siegelfähige Deckschicht (A) zugeführt.

Dann wurde durch Coextrusion und anschließende stufenweise Orientierung in Längs- und Querrichtung eine transparente, dreischichtige Folie mit ABC-Aufbau und einer Gesamtdicke von 12 $\mu$m hergestellt. Die Dicke der jeweiligen Deckschichten betrug jeweils 1,5 $\mu$m.

Deckschicht (A), Mischung aus:

| 96 Gew.-% | Copolyester I mit einem SV-Wert von 800 |
|---|---|
| 4 Gew.-% | Masterbatch aus 97,75 Gew.-% Copolyester I und 1,0 Gew.-% ®Sylobloc 44 H (synthetisches $SiO_2$ der Fa. Grace) und 1,25 Gew.-% ®Aerosil TT 600 (pyrogenes $SiO_2$ der Fa. Degussa) |

Basisschicht (B):

| 100 Gew.-% | Polyethylenterephthalat mit einem SV-Wert von 800 |
|---|---|

Deckschicht (C), Mischung aus:

| 40 Gew.-% | Polyethylenterephthalat mit einem SV-Wert von 800 |
|---|---|
| 60 Gew.-% | Masterbatch aus 95 Gew.-% Polyethylenterephthalat und 5 Gew.-% Kieselsäurepartikel (®Sylobloc 44 der Firma Grace) mit einer mittleren Teilchengröße von 4,5 $\mu$m |

Die Herstellungsbedingungen in den einzelnen Verfahrensschritten waren:

| Extrusion | Temperaturen | A-Schicht: | 270 °C |
|---|---|---|---|
| | | B-Schicht: | 290 °C |
| | | C-Schicht: | 290 °C |
| | Temperatur der Abzugswalze | | 30 °C |
| Längsstreckung | Temperatur | | 80-126 °C |
| | Längsstreckverhältnis | | 4,0 |
| Querstreckung | Temperatur | | 80-135 °C |
| | Querstreckverhältnis | | 4,0 |
| Fixierung | Temperatur | | 230 °C |
| | Dauer | | 3 s |

Die Herstellbarkeit ist im Vergleich zu Beispiel 1 schlechter. Die Streckkräfte der matten Deckschicht sind in dem Vergleichsbeispiel 1 im Gegensatz zu Beispiel 1 sehr hoch. Dies führt zu einer schlechteren Laufsicherheit bei Vergleichsbeispiel 1. Der Weißgrad nach Berger lag bei der Folie im Vergleichsbeispiel 1 bei 17 und die Transparenz bei 89 %. Der Weißgrad ist zu niedrig und die Transparenz zu hoch.

**Tabelle 2**

| | Weiß-grad der Folie | Transparenz [%] | Glanz Messwinkel 60° | | Mittlere Rauigkeit $R_a$ [nm] | | Reibungswert COF | Topographie (Erhebungen >1,5 $\mu$m/mm$^2$] | Siegelanspringtemperatur [°C] | Siegelnahtfestigkeit [N/15 mm] | Kontaktwinkel [°] |
|---|---|---|---|---|---|---|---|---|---|---|---|
| | | | A-Seite | C-Seite | A-Seite | C-Seite | C-Seite gegen C-Seite | C-Seite | A-Seite gegen A-Seite | A-Seite gegen A-Seite | |
| B1 | 92 | 35 | 100 | 35 | 20 | 290 | 0,30 | 210 | 102 | 4,0 | 65,5 |
| B1a | 92 | 35 | 100 | 35 | 20 | 290 | 0,30 | 210 | 102 | 4,0 | 63,8 |
| B1b | 92 | 35 | 100 | 35 | 20 | 290 | 0,30 | 210 | 102 | 4,0 | 64,0 |
| B1c | 92 | 35 | 100 | 35 | 20 | 290 | 0,30 | 210 | 102 | 4,0 | 57,0 |
| B1d | 92 | 35 | 100 | 35 | 20 | 290 | 0,30 | 210 | 102 | 4,0 | 49,0 |
| B2 | 94 | 27 | 102 | 30 | 23 | 310 | 0,34 | 248 | 102 | 3,9 | |
| B3 | 92 | 35 | 99 | 27 | 21 | 335 | 0,35 | 288 | 102 | 4,0 | |
| VB1 | 17 | 89 | 140 | 55 | 25 | 230 | 0,33 | 190 | 105 | 2,0 | |

**Patentansprüche**

1. Polyesterfolie, die mindestens eine weiße Basisschicht (B), die mindestens 80 Gew.-% eines thermoplastischen Polyesters, bezogen auf das Gesamtgewicht dieser Schicht, enthält und mindestens eine siegelfähige Deckschicht (A) und eine matte, nicht siegelfähige Deckschicht (C) aufweist, **dadurch gekennzeichnet, dass**

   a. die Basisschicht (B) Weißpigment in einer Konzentration von 3 bis 15 Gew.-% enthält, bezogen auf das Gewicht der Basisschicht (B),
   b. die Deckschicht (C) Weißpigment in einer Konzentration von 1 bis 15 Gew.-% enthält, bezogen auf das Gewicht der Deckschicht (C), und
   c. die Deckschicht (C) weitere, von dem Weißpigment verschiedene Partikel in einer Konzentration von 1 bis 7 Gew.-% enthält, die einen mittleren Partikeldurchmesser $d_{50}$ von 2 bis 10 $\mu$m aufweisen und die ausgewählt werden aus Calciumcarbonat, amorpher Kieselsäure, Talk, Magnesiumcarbonat, Bariumcarbonat, Calciumsulfat, Lithiumphosphat, Calciumphosphat, Magnesiumphosphat, Aluminiumoxid, Lithiumfluorid, Calcium-, Barium-, Zink- oder Mangan-Salzen der eingesetzten Dicarbonsäuren, Kaolin, vernetzten Polymerpartikeln und Mischungen dieser Partikel, und
   d. die Deckschichten (A) und (C) aus einem Polyester aufgebaut sind, der 4 bis 30 Mol-% Isophthalsäureeinheiten aufweist, bezogen auf die Gesamtsäuremenge des Polyesters in diesen Schichten.

2. Polyesterfolie nach Anspruch 1, **dadurch gekennzeichnet, dass** das Weißpigment ausgewählt ist aus der Gruppe: Titandioxid, Bariumsulfat, Zinksulfid, Zinkoxid und Mischungen derselben.

3. Polyesterfolie nach Anspruch 2, **dadurch gekennzeichnet, dass** das Weißpigment $TiO_2$ ist.

4. Polyesterfolie nach Anspruch 3, **dadurch gekennzeichnet, dass** die Korngröße des Titandioxids zwischen 0,05 und 0,5 $\mu$m liegt.

5. Polyesterfolie nach Anspruch 3 oder 4, **dadurch gekennzeichnet, dass** das Titandioxid vom Rutil-Typ ist.

6. Polyesterfolie nach einem der Ansprüche 1 bis 5, **dadurch gekennzeichnet, dass** die von Weißpigment verschiedenen Partikel synthetisch hergestellte $SiO_2$-Partikel in kolloidaler Form sind.

7. Polyesterfolie nach einem der Ansprüche 1 bis 6, **dadurch gekennzeichnet, dass** die Rauigkeit der matten Seite der Folie im Bereich von 150 bis 1000 nm liegt.

8. Polyesterfolie nach einem der Ansprüche 1 bis 7, **dadurch gekennzeichnet, dass** die Oberfläche der matten Seite der Folie 150 bis 1500 Erhebungen pro mm$^2$ aufweist, die größer als 1,5 $\mu$m sind.

9. Polyesterfolie nach einem der Ansprüche 1 bis 8, **dadurch gekennzeichnet, dass** die Folie eine Mindestsiegeltemperatur der A-Seite gegen sich selbst von <110 °C aufweist und dass die Siegelnahtfestigkeit der A-Seite gegen sich selbst größer gleich 1,5 N/15 mm ist.

10. Polyesterfolie nach einem der Ansprüche 1 bis 9, **dadurch gekennzeichnet, dass** sie einen Weißgrad nach Berger von größer als 75 aufweist.

11. Polyesterfolie nach einem der Ansprüche 1 bis 10, **dadurch gekennzeichnet, dass** die Deckschicht (C) einen Glanz (60°) von kleiner als 50 aufweist.

12. Polyesterfolie nach einem der Ansprüche 1 bis 11, **dadurch gekennzeichnet, dass** sie eine Transparenz von kleiner als 50 % aufweist.

13. Polyesterfolie nach einem der Ansprüche 1 bis 12, **dadurch gekennzeichnet, dass** mindestens eine Oberfläche der Folie durch eine Behandlung funktionalisiert ist.

14. Polyesterfolie nach Anspruch 13, **dadurch gekennzeichnet, dass** die Behandlung eine Coronabehandlung ist.

15. Polyesterfolie nach Anspruch 13 oder 14, **dadurch gekennzeichnet, dass** die Behandlung eine Beschichtung der Folie ist.

**16.** Polyesterfolie nach Anspruch 15, **dadurch gekennzeichnet, dass** die Beschichtung eine Acrylatbeschichtung ist.

**17.** Polyesterfolie nach Anspruch 15, **dadurch gekennzeichnet, dass** die Beschichtung eine Beschichtung mit einem aminofunktionalen Silan ist.

**18.** Polyesterfolie nach Anspruch 15, **dadurch gekennzeichnet, dass** die Beschichtung eine Copolyesterbeschichtung ist.

**19.** Verfahren zur Herstellung einer Polyesterfolie nach Anspruch 1 umfassend die Schritte:

a) Herstellen einer mehrschichtigen Folie, zumindest umfassend eine Basisschicht (B) und eine Deckschicht (A) und eine Deckschicht (C), durch Coextrusion und Ausformen der Schmelzen zu flachen Schmelzefilmen,
b) biaxiales Strecken der Folie und
c) Thermofixieren der gestreckten Folie,

**dadurch gekennzeichnet, dass** die Basisschicht (B) Weißpigment in einer Konzentration von 3 bis 15 Gew.-% enthält (bezogen auf das Gewicht der Basisschicht (B)), die Deckschicht (A) weniger als 0,01 Gew.-% Partikel enthält (bezogen auf das Gewicht der Deckschicht (A)), die Deckschicht (C) Weißpigment in einer Konzentration von 1 bis 15 Gew.-% enthält (bezogen auf das Gewicht der Deckschicht (C)) und die Deckschicht (C) weitere, von dem Weißpigment verschiedene Partikel enthält, die einen mittleren Partikeldurchmesser $d_{50}$ von 2 bis 10 $\mu$m aufweisen, und die Deckschichten (A) und (C) aus einem Polyester aufgebaut sind, der 4 bis 30 Mol-% Isophthalsäureeinheiten aufweist (bezogen auf die Gesamtsäuremenge des Polyesters in diesen Schichten).

**20.** Verwendung einer Polyesterfolie nach einem der Ansprüche 1 bis 18 als flexible Verpackungsfolie, insbesondere für Nahrungs- und Genussmittel.

**21.** Verwendung einer Polyesterfolie nach Anspruch 20 als Deckelfolie für Lebensmittelbehältnisse, insbesondere Joghurtbecher.

**22.** Verwendung einer Polyesterfolie nach Anspruch 20 oder 21, **dadurch gekennzeichnet, dass** der Verpackungsvorgang auf schnelllaufenden Verpackungsmaschinen erfolgt.

**Claims**

**1.** A polyester film which has at least one white base layer (B), where this comprises at least 80 % by weight of a thermoplastic polyester, based on the total weight of said layer, and which has at least one sealable outer layer (A) and one matt, nonsealable layer (C), wherein

a. the base layer (B) comprises a concentration, based on the weight of the base layer (B), of from 3 to 15 % by weight of white pigment,
b. the outer layer (C) comprises a concentration, based on the weight of the outer layer (C), of from 1 to 15 % by weight of white pigment, and
c. the outer layer (C) comprises a concentration of from 1 to 7 % by weight of further particles different from the white pigment, where the median diameter $d_{50}$ of these particles is from 2 to 10 $\mu$m, and the particles are selected from calcium carbonate, amorphous silica, talc, magnesium carbonate, barium carbonate, calcium sulfate, lithium phosphate, calcium phosphate, magnesium phosphate, aluminum oxide, lithium fluoride, the calcium, barium, zinc, or manganese salts of the dicarboxylic acids used, kaolin, crosslinked polymer particles, and mixtures of these particles, and
d. the outer layers (A) and (C) are composed of a polyester which has, based on the entire amount of acid in the polyester of these layers, from 4 to 30 mol% of isophthalic acid units.

**2.** The polyester film as claimed in claim 1, wherein the white pigment has been selected from the group of: titanium dioxide, barium sulfate, zinc sulfide, zinc oxide, and mixtures of the same.

**3.** The polyester film as claimed in claim 2, wherein the white pigment is $TiO_2$.

**4.** The polyester film as claimed in claim 3, wherein the grain size of the titanium dioxide is from 0.05 to 0.5 $\mu$m.

**EP 1 902 839 B1**

5. The polyester film as claimed in claim 3 or 4, wherein the titanium dioxide is of rutile type.

6. The polyester film as claimed in any of claims 1 to 5, wherein the particles different from white pigment are synthetic $SiO_2$ particles in colloidal form.

7. The polyester film as claimed in any of claims 1 to 6, the roughness of whose matt side is in the range from 150 to 1000 nm.

8. The polyester film as claimed in any of claims 1 to 7, the surface of whose matt side has, per $mm^2$, from 150 to 1500 elevations larger than 1.5 $\mu$m.

9. The polyester film as claimed in any of claims 1 to 8, whose minimum sealing temperature of side A with respect to itself is <110 °C and whose seal seam strength of side A with respect to itself is greater than or equal to 1.5 N/15 mm.

10. The polyester film as claimed in any of claims 1 to 9, whose Berger whiteness is greater than 75.

11. The polyester film as claimed in any of claims 1 to 10, wherein the gloss (60 °) of the outer layer (C) is smaller than 50.

12. The polyester film as claimed in any of claims 1 to 11, whose transparency is smaller than 50 %.

13. The polyester film as claimed in any of claims 1 to 12, at least one surface of which has been functionalized via a treatment.

14. The polyester film as claimed in claim 13, wherein the treatment is a corona treatment.

15. The polyester film as claimed in claim 13 or 14, wherein the treatment is a coating of the film.

16. The polyester film as claimed in claim 15, wherein the coating is an acrylate coating.

17. The polyester film as claimed in claim 15, wherein the coating is a coating with an amino-functional silane.

18. The polyester film as claimed in claim 15, wherein the coating is a copolyester coating.

19. A process for production of a polyester film as claimed in claim 1, encompassing the steps of:

    a) production of a multilayer film, at least encompassing a base layer (B) and an outer layer (A) and an outer layer (C), via coextrusion and shaping of the melts to give flat melt films,
    b) biaxial stretching of the film, and
    c) heat-setting of the stretched film,

    which comprises the presence of a concentration (based on the weight of the base layer (B)) of from 3 to 15 % by weight of white pigment in the base layer (B), the presence of (based on the weight of the outer layer (A)) less than 0.01 % by weight of particles in the outer layer (A), the presence of a concentration (based on the weight of the outer layer (C)) of from 1 to 15 % by weight of white pigment in the outer layer (C), and the presence, in the outer layer (C), of further particles different from the white pigment, their median diameter $d_{50}$ being from 2 to 10 $\mu$m, where the polyester of which the outer layers (A) and (C) are composed has (based on the entire amount of acid in the polyester of these layers) from 4 to 30 mol% of isophthalic acid units.

20. The use of a polyester film as claimed in any of claims 1 to 18 as flexible packaging film, in particular for foods and other consumable items.

21. The use of a polyester film as claimed in claim 20 as lid film for food- or drink-containers, in particular yogurt pots.

22. The use of a polyester film as claimed in claim 20 or 21, wherein the packaging procedure takes place on high-speed packaging machines.

**19**

**Revendications**

1. Feuille de polyester, qui présente au moins une couche de base blanche (B), qui contient au moins 80 % en poids d'un polyester thermoplastique par rapport au poids total de cette couche, et au moins une couche de recouvrement scellable (A) et une couche de recouvrement (C) mate non scellable, **caractérisée en ce que**

   a. la couche de base (B) contient un pigment blanc en concentration de 3 à 15 % en poids par rapport au poids de la couche de base (B),
   b. la couche de recouvrement (C) contient un pigment blanc en concentration de 1 à 15 % en poids par rapport au poids de la couche de recouvrement (C), et
   c. la couche de recouvrement (C) contient d'autres particules différentes du pigment blanc en concentration de 1 à 7 % en poids, qui présentent un diamètre particulaire moyen $d_{50}$ de 2 à 10 $\mu$m et qui sont choisies parmi le carbonate de calcium, l'acide silicique amorphe, le talc, le carbonate de magnésium, le carbonate de baryum, le sulfate de calcium, le phosphate de lithium, le phosphate de calcium, le phosphate de magnésium, l'oxyde d'aluminium, le fluorure de lithium, des sels de calcium, de baryum, de zinc ou de manganèse des acides dicarboxyliques employés, le kaolin, des particules polymères réticulées et des mélanges de ces particules, et
   d. les couches de recouvrement (A) et (C) sont constituées d'un polyester qui présente 4 à 30 % en mole d'unités acide isophtalique par rapport à la quantité d'acide totale du polyester dans ces couches.

2. Feuille de polyester selon la revendication 1, **caractérisée en ce que** le pigment blanc est choisi dans le groupe constitué du dioxyde de titane, du sulfate de baryum, du sulfure de zinc, de l'oxyde de zinc et de mélanges de ceux-ci.

3. Feuille de polyester selon la revendication 2, **caractérisée en ce que** le pigment blanc est le $TiO_2$.

4. Feuille de polyester selon la revendication 3, **caractérisée en ce que** la taille granulaire du dioxyde de titane se situe entre 0,05 et 0,5 $\mu$m.

5. Feuille de polyester selon la revendication 3 ou 4, **caractérisée en ce que** le dioxyde de titane est du type rutile.

6. Feuille de polyester selon l'une quelconque des revendications 1 à 5, **caractérisée en ce que** les particules différentes du pigment blanc sont des particules de $SiO_2$ fabriquées de manière synthétique et se présentant sous une forme colloïdale.

7. Feuille de polyester selon l'une quelconque des revendications 1 à 6, **caractérisée en ce que** la rugosité du côté mat de la feuille se situe dans la plage de 150 à 1000 nm.

8. Feuille de polyester selon l'une quelconque des revendications 1 à 7, **caractérisée en ce que** la surface du côté mat de la feuille présente 150 à 1500 surélévations par mm$^2$, qui sont supérieures à 1,5 $\mu$m.

9. Feuille de polyester selon l'une quelconque des revendications 1 à 8, **caractérisée en ce que** la feuille présente une température de scellage minimale du côté A contre lui-même < 110 °C et **en ce que** la résistance du cordon de scellage du côté A contre lui-même est supérieure ou égale à 1,5 N/15 mm.

10. Feuille de polyester selon l'une quelconque des revendications 1 à 9, **caractérisée en ce qu'**elle présente un degré de blanc selon la norme Berger supérieur à 75.

11. Feuille de polyester selon l'une quelconque des revendications 1 à 10, **caractérisée en ce que** la couche de recouvrement (C) présente une brillance (60°) inférieure à 50.

12. Feuille de polyester selon l'une quelconque des revendications 1 à 11, **caractérisée en ce qu'**elle présente une transparence inférieure à 50 %.

13. Feuille de polyester selon l'une quelconque des revendications 1 à 12, **caractérisée en ce qu'**au moins une surface de la feuille est fonctionnalisée par un traitement.

14. Feuille de polyester selon la revendication 13, **caractérisée en ce que** le traitement est un traitement de type Corona.

15. Feuille de polyester selon la revendication 13 ou 14, **caractérisée en ce que** le traitement est un revêtement de la feuille.

**16.** Feuille de polyester selon la revendication 15, **caractérisée en ce que** le revêtement est un revêtement d'acrylate.

**17.** Feuille de polyester selon la revendication 15, **caractérisée en ce que** le revêtement est un revêtement avec un silane à fonction amino.

**18.** Feuille de polyester selon la revendication 15, **caractérisée en ce que** le revêtement est un revêtement de copolyester.

**19.** Procédé de fabrication d'une feuille de polyester selon la revendication 1, comprenant les étapes consistant à :

a) fabriquer une feuille multicouche, au moins comprenant une couche de base (B), une couche de recouvrement (A) et une couche de recouvrement (C), par coextrusion et démoulage de la masse fondue pour donner des films fondus plats,
b) étirer biaxialement la feuille et
c) procéder à une thermofixation de la feuille étirée,

**caractérisée en ce que** la couche de base (B) contient un pigment blanc en concentration de 3 à 15 % en poids (par rapport au poids de la couche de base (B)), **en ce que** la couche de recouvrement (A) contient moins de 0, 1 % en poids de particules (par rapport au poids de la couche de recouvrement (A)), **en ce que** la couche de recouvrement (C) contient un pigment blanc en concentration de 1 à 15 % en poids (par rapport au poids de la couche de recouvrement (C)) et **en ce que** la couche de recouvrement (C) contient d'autres particules différentes du pigment blanc, qui présentent un diamètre particulaire moyen $d_{50}$ de 2 à 10 $\mu$m, et les couches de recouvrement (A) et (C) sont constituées d'un polyester, qui présente 4 à 30 % en mole d'unités acide isophtalique (par rapport à la quantité d'acide totale du polyester dans ces couches).

**20.** Utilisation d'une feuille de polyester selon l'une quelconque des revendications 1 à 18 comme feuille d'emballage souple, en particulier pour des produits alimentaires et d'agrément.

**21.** Utilisation d'une feuille de polyester selon la revendication 20 comme film de couvercle pour des récipients de produits alimentaires, en particulier des pots de yaourt.

**22.** Utilisation d'une feuille de polyester selon la revendication 20 ou 21, **caractérisée en ce que** l'opération d'emballage s'effectue sur des machines d'emballage fonctionnant à vitesse élevée.

Figur 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 1465973 A
- EP 0035835 A
- EP 0515096 A
- EP 1138480 A
- DE 2353347 A
- US 3154461 A
- WO 0153092 A
- EP 1529797 A
- WO 9413476 A
- EP 0144878 A
- US 4252885 A
- EP 0296620 A
- WO 9413481 A
- EP 0359017 B

**In der Beschreibung aufgeführte Nicht-Patentliteratur**

- **HANSL LOOS.** Farbmessung. Verlag Beruf und Schule, 1989